# EUROPÄISCHE PATENTSCHRIFT

(11) **EP 1 019 561 B1**
(45) Veröffentlichungstag und Bekanntmachung des Hinweises auf die Patenterteilung: **18.12.2002**
(21) Anmeldenummer: 98945148.9
(22) Anmeldetag: 05.08.1998
(51) Int. Cl.: C23C 8/18, C23C 8/14

(54) **VERFAHREN UND VORRICHTUNG ZUM GEMEINSAMEN OXIDIEREN UND WÄRMEBEHANDELN VON TEILEN**
METHOD AND DEVICE FOR JOINT OXIDATION AND HEAT TREATMENT OF WORKPIECES
PROCEDE ET DISPOSITIF D'OXYDATION ET DE TRAITEMENT THERMIQUE DE GROUPES DE PIECES

(30) Priorität: 22.08.1997 DE 19736514
(43) Veröffentlichungstag der Anmeldung: 19.07.2000
(73) Patentinhaber: Messer Griesheim GmbH, 65933 Frankfurt am Main (DE)
(72) Erfinder: SCHMIDT, Hans-Peter, D-40822 Mettmann (DE)
(86) Internationale Anmeldenummer: EP9804871
(87) Internationale Veröffentlichungsnummer: WO99010556

(56) Entgegenhaltungen:
- EP-A- 0 385 403
- EP-A- 0 392 534
- DE-A- 3 231 699
- DE-B- 2 440 447
- R. HOFFMANN: "Oxidationsvorgänge bei Wärmebehandlungen unter Schutzgas" HARTEREITECHNISCHE MITTEILUNGEN, Bd. 39, Nr. 2, März 1984 - April 1984, Seiten 61-70, XP002087508 munchen,de
- PATENT ABSTRACTS OF JAPAN vol. 011, no. 357 (C-458), 20. November 1987 & JP 62 130221 A (NIPPON MINING CO LTD;OTHERS: 01), 12. Juni 1987

## Beschreibung

Die Erfindung betrifft ein Verfahren und eine Vorrichtung zum gemeinsamen Oxidieren und Wärmebehandeln von Teilen nach dem Oberbegriff der Ansprüche 1 und 11.

Bei der Wärmebehandlung von Metallteilen wird in der Regel die Gasatmosphäre im Behandlungsraum eines Ofens so eingestellt, daß eine saubere und blanke Metalloberfläche erzeugt wird. Oxidation ist dabei unerwünscht, da nachfolgende Prozesse durch die gebildeten Oxidschichten negativ beeinflußt werden können. Es gibt jedoch spezielle Anwendungsfälle, in denen es nützlich und sinnvoll ist, eine oxidische Deckschicht auf der Oberfläche der Metallteile zu erzeugen. Die gewünschte chemische Zusammensetzung und die Dicke dieser aufgewachsenen oxidischen Deckschichten stellen ganz besondere Anforderungen an die Gasatmosphäre im Behandlungsraum des Ofens und die Prozeßführung. Durch so definiert hergestellte Oxidschichten können dekorative Oberflächen erzeugt werden, die gleichzeitig als Korrosionsschutz, Isolations- oder Absorptionsschichten dienen.

Das Vergüten, bzw. Einsatzhärten, Karbonitrieren usw. von Massenteilen wird in Ofenanlagen durchgeführt, deren Behandlungsraum Schutz- und/oder Reaktionsgase durchströmen.

Die Teile werden unter Einsatz von Stickstoff in Kombination mit reaktiven Komponenten oder mit Endogas o. ä. auf die jeweilige Austenitisierungstemperatur erwärmt, thermochemisch behandelt und durch Abschrecken in Öl oder Wasser oder flüssigem Salz gehärtet. In einem anschließenden zweiten Wärmebehandlungsschritt wird durch Anlassen der gehärteten Teile die geforderte Härte eingestellt. Das Anlassen erfolgt dabei in der Regel bei Temperaturen zwischen 150°C und 570°C in einer Luft- oder Stickstoffatmosphäre. Bei diesen Bedingungen kann eine Oxidation des Eisens zu Magnetit (Fe₃O₄) stattfinden. Die Oxidschicht weist dabei keine ausreichende Schichtdicke auf, um eine optisch ansprechende, dekorative, gleichmäßige Oberfläche darzustellen.

Es werden daher Beschichtungsverfahren eingesetzt, die eine dekorative, gleichmäßige Schicht auf den Oberflächen der zu bearbeitenden Teile zu erzeugen. Das Aufbringen von fest haftenden Schichten auf der Oberfläche wird durch Brünieren, Phosphatieren, Lackieren udgl. erzielt. Diese zusätzlichen Beschichtungsverfahren verursachen einen erheblichen Verfahrensaufwand und zusätzliche Kosten, bei teilweise ungleichmäßigeren Deckschichten. Es wurde daher bereits vorgeschlagen, Härten und Bläuen in einem Prozeßschritt durchzuführen (DE 43 33 940). Durch dieses Verfahren konnten die Kosten für die Beschichtung erheblich gesenkt, der Verfahrensablauf verbessert, die Verfügbarkeit der zu bearbeitenden Teile erhöht und der Einsatz von Chemikalien ebenso verringert werden, wie die beim Prozeß auftretenden Emissionen.

Bei dem bekannten Verfahren wäre es jedoch wünschenswert, wenn die Reproduzierbarkeit bei noch gleichmäßigerer Oxidschichtbildung erhöht, und die geringfügige Entkohlung noch weiter abgesenkt werden könnte.

Der Erfindung liegt die Aufgabe zugrunde, ein Verfahren zum gemeinsamen Oxidieren und Wärmebehandeln von Teilen zu schaffen, das reproduzierbarer ist und zu gleichmäßigeren, korrosionsbeständigeren Oxidschichten führt.

Diese Aufgabe wird erfindungsgemäß durch die im Anspruch 1 angegebenen Merkmale gelöst.

Vorteilhafte Weiterbildungen der Erfindung sind in den Unteransprüchen angegeben.

Bei dem Verfahren nach der Erfindung wird nach Umwandlung des bei Umgebungstemperatur vorhandenen Gefüges der Teile in das bei der Wärmebehandlung gewünschte Gefüge in dem Behandlungsraum ein PH₂O/PH₂-Verhältnis so eingestellt, daß die Linie FeO + H₂ = Fe + H₂O überschritten und eine Oxidschicht aus FeO < 10µm ausgebildet wird. Dadurch daß das PH₂O/PH₂-Verhältnis erst nach Umwandlung des bei Umgebungstemperatur vorhandenen Gefüges der Teile in das bei der Wärmebehandlung gewünschte Gefüge in dem Behandlungsraum eingestellt wird, sind bei der Wärmebehandlung der Teile keine die Teile oxidierenden Reaktionsmittel im Behandlungsraum vorhanden.

Die Wärmebehandlung und die Oxidation der Teile laufen in separaten Verfahrensschritten in dem gemeinsamen Behandlungsraum bzw. nachfolgendem Oxidationsraum ab, wodurch die Wärmebehandlung der Teile und die Oxidation der Teile getrennt gesteuert werden können. Damit ist eine reproduzierbare Verfahrensführung möglich, da die Wärmebehandlung und die Oxidation sich nicht beinflussen.

Bei der vorgegebenen Grenztemperatur > 570° und dem im Behandlungsraum eingestellten PH₂O/PH₂-Verhältnis wird die
Linie FeO + H₂ = Fe + H₂O überschritten.

Da die Prozeßführung unter isothermen Bedingungen geführt wird, und Eisen mit dem gebildeten Eisenoxid im Gleichgewicht steht, bildet sich Wüstit (FeO). Überraschender Weise hat sich dabei gezeigt, daß die bei diesen hohen Temperaturen gebildete FeO-Oxidschicht einen gleichmäßigeren Aufbau aufweist, der gut haftendend, blasenfrei, kratzfest und kontaktstellenfrei ist.

Vorteilhaft wird eine FeO-Oxidschicht < 10µm ausgebildet, da sich eine Oxidschicht < 10µm bei dem sich an das erfindungsemäße Verfahren anschließenden Abkühlprozeß nicht ablöst, beziehungsweise keine Blasen und Risse bildet.

Diese gebildete Oxidschicht hat gleichzeitig positive Einflüsse auf die Abkühlungsgeschwindigkeit beim Härten, da der Wärmeübergangskoeffizient verändert wird. Hierbei zeigte sich, daß der Wärmeübergangskoeffizient geringer wird, so daß ein langsameres Abkühlen der Teile erfolgt und somit weniger Restaustenit bei einsatzgehärteten Teilen im Randbereich gebildet wird.

Vorteilhaft wird die Oxidation der Teile in einem Zeitraum von <20 Minuten, insbesondere ≤ 14 Minuten abgeschlossen, da sich innerhalb dieses Zeitraums die gewünschte FeO-Schicht von <10 µm bei den üblichen Härtetemperaturen von 800 bis 900°C einstellt. Dabei haben sich Oxidschichten zwischen 2 und 6 µm als besonders vorteilhaft erwiesen. Diese Schichten sind kompakt, deckend, mit den Grundwerkstoff gut verzahnt und haben eine ansprechende btau-schwarze bis schwarze Oberflächenfarbe.
Aufgrund der äußerst geringen Oxidationszeit wurde eine Entkohlung im Randbereich der Grundteile nicht beobachtet.

Die gebildete Oxidschicht verhindert somit die entkohlende Wirkung des eingesetzten Wassers, da sie wie eine Sperrschicht wirkt und die Wachstumsgeschwindigkeit der sich bildenden Oxidschicht größer ist, als die Entkohlungsgeschwindigkeit über die Reaktion:

C_{(gelöst in Fe)} + H₂O = CO + H₂

Da in dem Behandlungsraum ein PH₂O/PH₂-Verhältnis, vorzugsweise <20, insbesondere <10, beim Einleiten oder Verdüsen des Reaktionsmittels bei Temperaturen >570°C eingestellt wird, wird ausschließlich Wüstit (FeO) gebildet. Überraschender Weise hat sich hierbei gezeigt, daß selbst bei höheren PH₂O/PH₂-Verhältnissen kein Fe₃O₄ gebildet wird. Dabei wird vermutet, daß sich die FeO-Bildung auch bei höheren PH₂O/PH₂-Verhältnis fortsetzt, da die Diffusionsgeschwindigkeiten der Ionen so groß sind, daß sich kein Gleichgewicht zwischen der Gasphase und dem Eisenoxid einstellt und die Magnetitbildung Fe₃O₄ unterbleibt.

Aufgrund der hohen PH₂O/PH₂ -Verhältnisse und der daraus resultrierenden hohen Wasserdampfgehalte im reaktiven Gas des Behandlungsraumes gibt es keine lokalen Verarmungen an oxidierenden Reaktionsmitteln, demzufolge gibt es auch keine Unterschiede in der Schichtdicke. Auch bei sehr komplizierten Bauteilen bei denen Sackbohrungen vorhanden sind, bildeten sich 100% geschlossene Deckschichten. Weiterhin konnten aufgrund der hohen Verfügbarkeit an Wasser Schüttgüter von Kleinteilen kontaktfrei oxidiert werden.

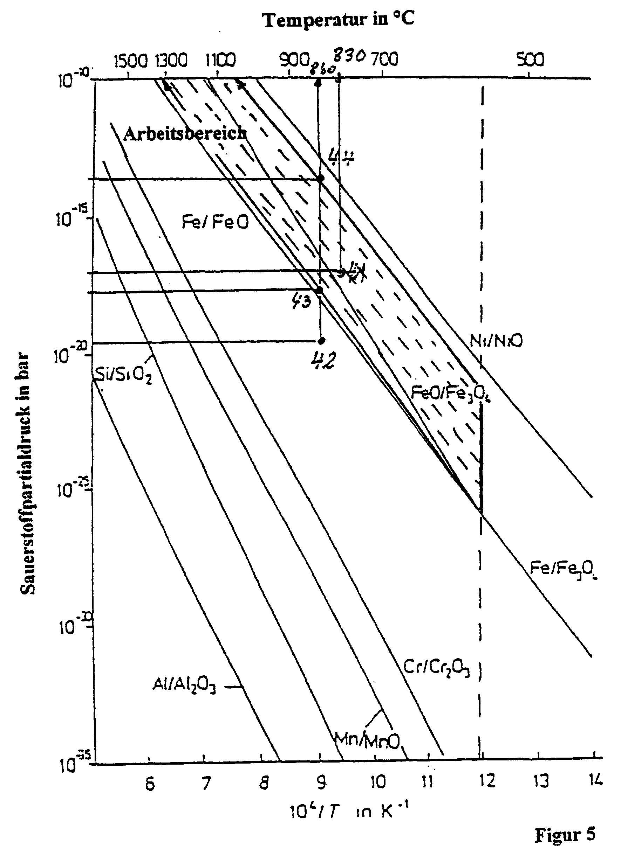

Da die FeO-Bildung innerhalb eines Zeitraums von <3 Minuten, vorzugsweise <1 Minute einsetzt, erfolgt der Gasphasenwechsel nahezu schlagartig, so daß eine Entkohlung während der ersten Oxidationsphase nicht erfolgen kann (Figur 5). Es bildet sich unmittelbar eine die blanke Metalloberfläche absperrende Deckschicht aus, die die Reaktion zwischen dem Wasserdampf und dem gelösten Kohlenstoff verhindert. Die Oxidschicht kann keinen Kohlenstoff lösen, demzufolge ist eine Kohlenstoffdiffusion durch die Oxidschicht unterbunden.
Da Eisen für die Oxidbildung benötigt wird, reichert sich der im Randbereich gelöste Kohlenstoff an der Phasengrenze Oxid-Metall leicht an, dieser wird jedoch während der kurzen Oxidationszeit ausgeglichen.

Besonders vorteilhaft hat sich entsalztes Wasser, welches in flüssiger Form in dem Behandlungsraum des Ofens eingedüst wird, als oxidierendes Reaktionsmittel erwiesen, da Wasser bei den Temperaturen schlagartig verdampft und sich das angestrebte PH₂O/PH₂-Verhältnis unmittelbar einstellt. Hinzu kommt, daß das oxidierende Reaktionsmittel Wasser überall verfügbar ist und für den Anwender das wirtschaftliche Optimum darstellt. Bei dem oxidierenden Reaktionsmittel Wasser wird eine gleichmäßig deckende Schwarzfärbung der Teile erreicht. Auch andere sauerstoffhaltige Verbindungen können als Reaktionsmittel in den Behandlungsraum eingeleitet oder eingedüst werden und somit eine definierte Sauerstoffaktivität einstellen, die benötigt wird, um Eisen zu Wüstit zu oxidieren (Figur 5).

In Figur 5 ist der Arbeitsbereich eingetragen, in dem oxidiert wird. Auf der Koordinate ist der Sauerstoffpartialdruck in bar, der proportional der Sauerstoffaktivität ist, und auf der Abszisse ist die reziproke Temperatur in Kelvin dargestellt. Weiterhin sind die beiden Oxidationsarbeitspunkte 41 und 44 der beiden Ausführungsbeispiele 2 und 1 eingetragen. Die Bezugsziffer 41 gibt das einestellte PH₂O/PH₂-Verhältnis von ca. 3 und die Bezugsziffer 44 das PH₂O/PH₂-Verhältnis von ca. 140 wieder.

Beim Einsatz des bevorzugten Reaktionsmittels Wasser werden als zusätzliche Stoffe Stickstoff und/oder Endogas und/oder Wasserstoff und/oder Kohlenwasserstoffe in den Behandlungsraum eingeleitet oder eingedüst, wobei mindestens einer dieser Stoffe, vorzugseise Stickstoff, als Treibmittel für die Verdüsung des Wassers eingesetzt wird. Die Stoffe dienen der Aufrechterhaltung des Ofendruckes undloder der Einstellung der benötigten Gasatmosphäre im Behandlungsraum des Ofens. Sie stellen das PH₂O/PH₂-Verhältnis in den geforderten Grenzen mit ein.

Die mit der FeO-Oxidschicht versehenen Teile, werden nach Erreichen einer Oxidschicht <10µm in einem Abschreckmedium so abgekühlt, daß eine Vergrößerung der Oxidschicht gehemmt, vorzugsweise gestoppt, und die vorhandene Oxidschicht konserviert wird. Das Abkühlen erfolgt am Ende des Verfahrens zum gemeinsamen Oxidieren und Wärmebehandeln und verhindert ein weiteres Aufwachsen der Oxidschicht auf Oxidschichtdicken >10 µm. Die Oxidschichtbildung wird durch die Abkühlung im Abschreckmedium sofort unterbrochen.

Die Oxidschicht haftet nach dem Anlassen der Teile bei Temperaturen bis 500°C auch ohne daß das Aussehen der Oberfläche verändert wird.

Der Oxidationsprozeß ist reversibel, das heißt, daß die gebildeten Oxidschichten in einem zweiten Härteprozeß reduziert und anschließend wieder gebildet werden können, ohne daß die Werkstoffeigenschaften negativ beeinflußt werden.

Eine besonders vorteilhafte Vorrichtung zur Durchführung des Verfahrens ist durch Zuführmittel 18, 19; 21, 22; 20, 26; 23, 27 für das Reaktionsmittel 18, 19 und Kohlenwasserstoffe 21, 22 und Stickstoff 20, 26 und Endogas 23, 27 in den Behandlungsraum 10 des Ofens 25 und einer Steuerung 15 zum Steuern und/oder Regeln der Mittel gekennzeichnet. Die Zuführmittel 18, 19; 21, 22; 20, 26; 23, 27 bestehen aus Leitungen 18, 21, 23, 26 in denen Steuerelemente 19, 22, 20, 27 angeordnet sind, wobei die Steuerelemente über Steuerleitungen 14, 16, 17, 28, 29 von der Steuerung 15 automatisch kontrollierbar sind. Die Steuerung 15 stellt die Steuerelemente zwischen einer Offen- und Zustellung in Abhängigkeit von in dem Behandlungsraum 10 erfaßten Ist-Signalen und/oder in der Steuerung abgelegten Zeit-Signalen ein, so daß die Einleitung oder Verdüsung des oxidierenden Reaktionsmittels in den Behandlungsraum 10 freigegeben oder gesperrt wird. Ein im Behandlungsraum 10 des Ofens 25 angeordneter Ventilator ist mit 24 gekennzeichnet.

Durch die automatisierte Prozeßführung wird eine reproduzierbare Oxidation und Wärmebehandlung der Teile gewährleistet. Mittels einer Regelung des PH₂O/PH₂-Verhältnisses wird die Sauerstoffaktivität konstant gehalten und so die Wachstumsgeschwindigkeit und Morphologie zu jedem Zeitpunkt sichergestellt. Zur Regelung werden Ist-Signale in Abhängigkeit von dem PH₂O/PH₂-Verhältnis gebildet, welche mit in der Steuerung abgelegten Soll-Signalen verglichen werden. Bei Abweichung der Ist-Signale von den Soll-Signalen wird die Stellung der Steuerelemente nachgeregelt.

Besonders vorteilhaft werden die Ist-Signale mittels einer O₂-Sonde 13 oder einer Lambda-Sonde erfaßt, da mittels dieser Sensoren die tatsächliche wirksame Sauerstoffaktivität auf der Oxidoberfläche bestimmt wird.

### Ausführungsbeispiel 1:

In einem diskontinuierlich arbeitenden Mehrzweckkammerofen 25 wurden Einsatz- bzw. Vergütungsstähle, die als Schüttgut 12 in den Behandlungskörben 11 unsortiert vorlagen chargenweise bei Temperaturen zwischen 800°C und 950°C aufgekohlt, karbonitriert oder nur vergütet. Als Schutzgas bzw. Trägergas durchströmte ein Endogas (20% CO, 40% H₂, Rest N₂), welches aus Erdgas oder Propan mit Luft bzw. aus Methanol und Stickstoff hergestellt wird, kontinuierlich den Mehrzweckkammerofen während der Wärmebehandlung. Der Kohlenstoffpegel der Gasphase wurde durch Zugabe von Kohlenwasserstoffen so lange geregelt, bis der gewünschte Randkohlenwasserstoffgehalt beziehungsweise die Einsatzhärtetiefe der Teile erreicht wurde. Kurz vor Ende der Behandlungszeit wurde ein oxidierendes Reaktionsmittel, zum Beispiel entsalztes Wasser, bei einer Temperatur von ca. 860°C innerhalb von 1 Minute gemeinsam mit Stickstoff in den Behandlungsraum des Ofens eingedüst. Die Volumenströme des oxidierenden Reaktionsmittels und des Stickstoffs wurden so eingestellt, daß sich ein PH₂O/PH₂-Verhältnis >0,3 und <150 im Behandlungsraum des Ofens ausbildete. Über eine Zeitspanne von <20 Minuten bildete sich eine dünne, gut haftende FeO-Oxidschicht <10µm mit blauschwarzer Farbe.

In Figur 5 (Ausführungsbeispiel 1) ist der gesamte Wärmebehandlungsprozeß bezüglich der Sauerstoffaktivität dargestellt. Die Einstellung des Randkohlenstoffgehaltes von 0,70 % C (42) liegt im Eisenstabilitätsbereich und somit ist die Oberfläche der Teile bei diesen Bedingungen metallisch blank. Beim Umschalten auf oxidierende Bedingungen wird die FeO-Stabilitätslinie nach 0,5 Minuten überschritten (43) und nach weiteren 12 Minuten Oxidationszeit wird die Endsauerstoffaktivität von log PO2 = -12,75 erreicht (44).
Die gebildeten Oxidschichten auf den Teilen waren unter dieser Verfahrensweise ebenfalls einwandfrei. Der Taupunkt der Oxidationsgasphase lag bei ca. + 80°C zum Ende der Behandlung.

Eine optische Prüfung ergab, daß die aufgewachsene Oxidschicht absolut gleichmäßig und blasenfrei ist. Angefertigte Schliffbilder zeigten eine entkohlungsfreie Randzone, die aus Wüstit (FeO) und einem angrenzenden Übergangsbereich besteht.

### Ausführungsbeispiel 2:

Die Oxidation der Teile wird zum Ende einer Wärmebehandlung, wie zum Beispiel Vergüten, Einsatzhärten, Karbonitrieren u.a., bei Temperaturen > 570°C durchgeführt. Die Prozeßzeit bei der Wärmebehandlung der Teile ändert sich durch den zusätzlichen Oxidationsprozeß nicht.

### Beispiel: Vergüten von 58CrV4 bei 830°C im Mehrzweckkammerofen

Die Charge wird in einem verdünntem Endogas:

| | | |
|---|---|---|
| | 4 m³ Endogas/h | (aus Propan) |
| + | 5 m³ Stickstoff/h | |
| + | 150 I Propan/h | (Cp-Regelung) |

(11% CO, 19% H₂, 1 bis 2% CH₄, Rest N₂) aufgeheizt und bei 830°C durchgewärmt und austenisiert. Die Gesamthaltezeit beträgt ca.
20 Minuten und der C-Pegel der Gasatmosphäre wird auf 0,58% C konstantgehalten.

Ca. 10 Minuten vor Ende der Haltezeit werden "schlagartig" ca. 5 l/h entsalztes Wasser mit Stickstoff über eine Lanze in den heißen Behandlungsraum eingedüst. Aus den 5 l Wasser/h entstehen 6,2m³ Wasserdampf pro Stunde, so daß ein Gesamtvolumenstrom von ca. 16m³ Gas/h den Behandlungsraum des Ofens durchströmt.

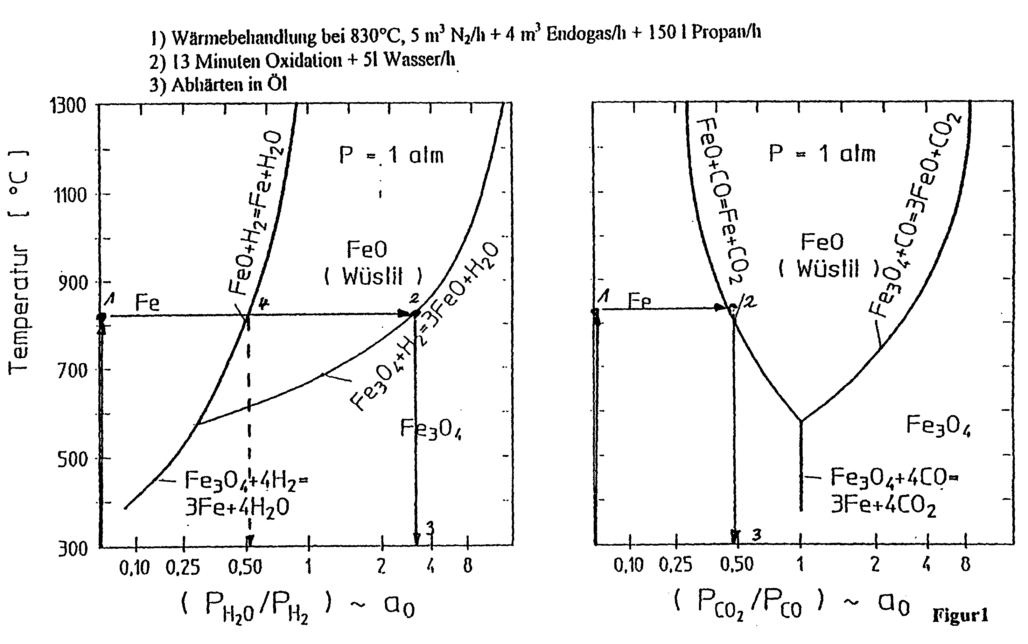

Die Zusammensetzung des Frischgases beträgt:
40% H₂O (Taupunkt = + 75°C); 10% H₂; 6% CO; Rest N₂ und das Verhältnis von PH₂O/PH₂ ist ca. 3. Wie Figur 1 zeigt, ist die Wirkung des Gasgemisches somit stark oxidierend.

Figur 1a zeigt ein Diagramm, in dem die Stabilitätsfelder der einzelnen Feststoffe - Eisen, Wüstit und Magnetit - in Abhängigkeit von der Temperatur und dem PH₂O/PH₂-Verhältnis eingetragen sind. Der gesamte Wärmebehandlungsprozeß ist in diesem Diagramm eingetragen und so die herrschenden Bedingungen bezüglich der Gasphase und dem Werkstoff dargestellt. Beim Aufheizen und Halten des Eisenwerkstoffes bleiben die Oberflächen der Teile metallisch blank. Erst wenn das oxidierende Gas in dem Behandlungsraum eingedüst wird, verändert sich die Sauerstoffaktivität derart, daß die Stabilität von Wüstit erst möglich ist. Es bildet sich auf der Oberfläche das gewünschte Eisenoxid. Während dieser Oxidationsphase wird gleichzeitig das PCO₂/PCO-Verhältnis eingestellt, welches am Ende der Oxidation der Phasengrenze Eisen/FeO entspricht. Ein größeres PCO₂/PCO-Verhältnis ist aufgrund des gebildeten Eisenoxides nicht möglich, das heißt, daß nur das eingesetzte Wasser für die Bildung von FeO verantwortlich ist. Das PCO₂/PCO-Verhältnis an der Phasengrenze Fe/FeO hat bei 830°C einen Wert von 0,5 und das durch die eingesetzten Gase entstehende PH₂O/PH₂-Verhältnis beträgt ca. 3.

Folgende Spannungen stellen sich in der zum Einsatz kommenden
λ-Sonde bzw. O₂-Sonde ein:
- 973 m V (λ-Sonde, 600°C)
- 889 m V (O₂-Sonde, 830°C)

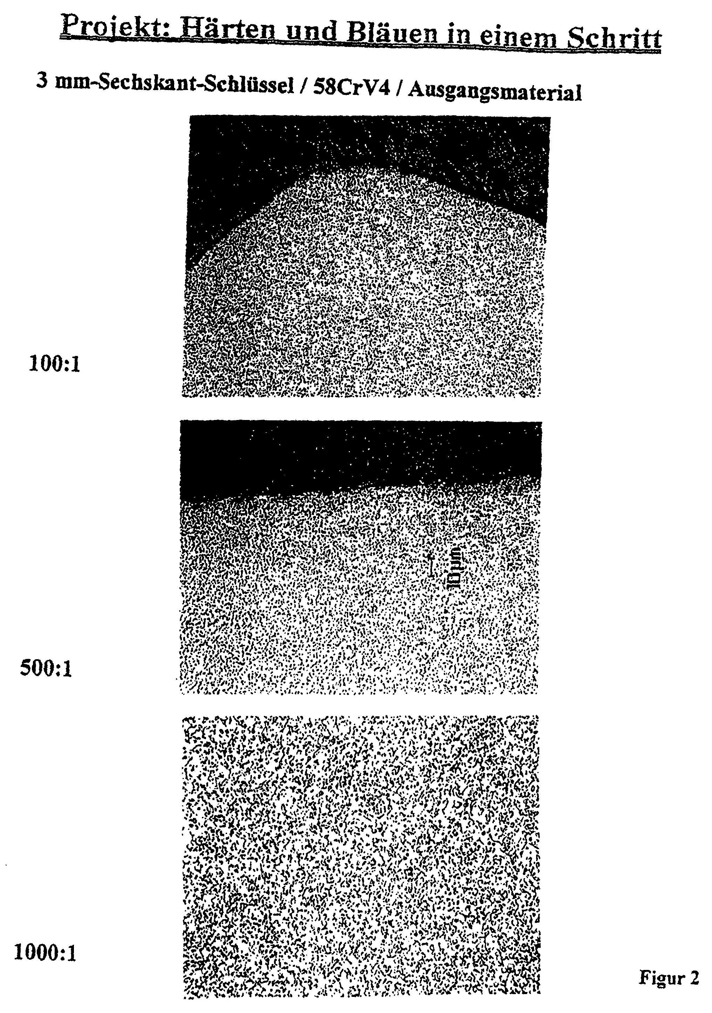

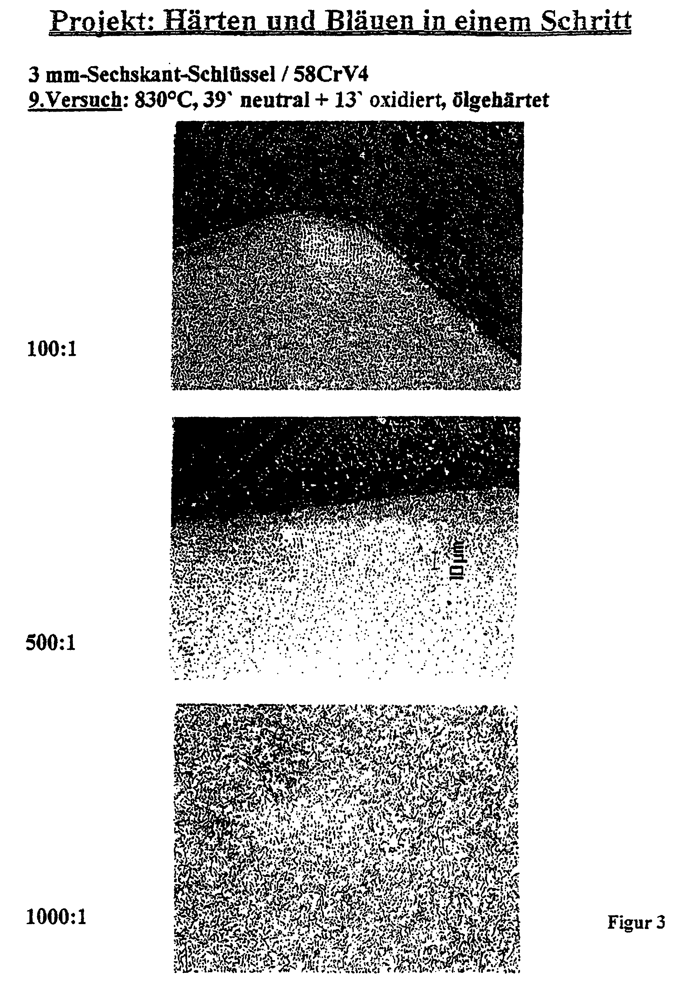

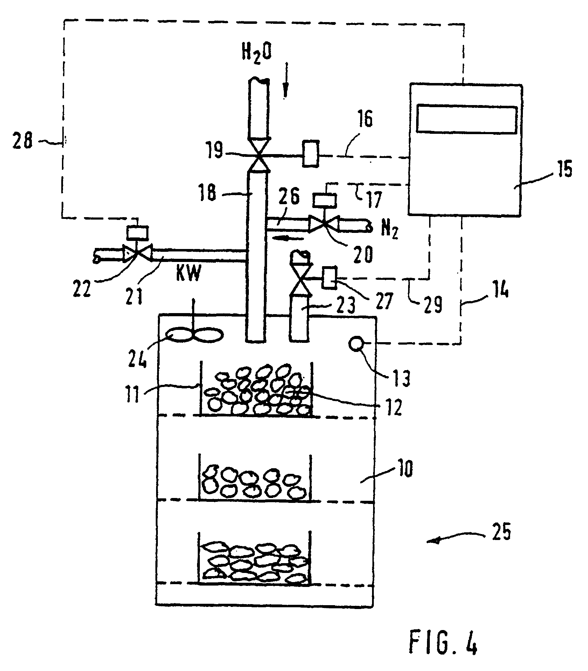

Der große Volumenstrom von ca. 16 m³/h bewirkt, daß nach relativ kurzer Zeit (1 Minute), im Ofenraum (ca. 0,3 m³ Volumen) ein stationärer Zustand des Schutzgases erreicht wird und die Teile oxidiert werden. Die Oberfläche der Teile wird nach einigen Minuten mit einer geschlossenen Eisenoxidschicht belegt, die im weiteren Verlauf der Oxidation nach außen wächst. Die Schichtdickenzunahme ist abhängig von der herrschenden Temperatur, Zeit und des PH₂O/PH₂-Verhält-nisses und der zudosierten Kohlenwasserstoffkonzentration. Da das Eisenoxid keinen Kohlenstoff lösen kann, ist eine Entkohlung der Werkstoffrandzone zu vernachlässigen (siehe Figuren 2 und 3). In
Figur 2 sind Fotos der lichtmikroskopisch untersuchten Gefüge des Ausgangsmaterials (3 mm - Sechskant-Schlüssel / 58 CrV4) abgebildet. Die Gefüge weisen im Rand- und Kernbereich keine Entkohlungszonen auf und sind homogen sowie feinkörnig.

In Figur 3 sind Fotos verschiedener Vergrößerungen der Gefüge der Teile, die gehärtet und einer Oxidation nach dem erfindungsgemäßen Verfahren unterzogen wurden. Die Aufnahmen zeigen keinerlei Entkohlungszonen im Randbereich der Teile auf. Der Übergang zwischen der metallischen, martensitischen Matrix und des äußeren Oxids ist scharf und weist eine gute Verzahnung der Oxidschicht mit dem Metall auf, was auf die gute Haftfestigkeit des Oxids hindeutet. Die Oxidschichtdicke ist ebenfalls gut ablesbar und beträgt 3-4 µm FeO.

Eine Entkohlung kann nur über Poren und Risse der Eisenoxidschicht erfolgen. Nachdem die eingestellte Oxidationszeit abgelaufen ist, wird die Wasserzufuhr gestoppt und die Charge wird in Öl abgeschreckt. Das eingesetzte Material (InbusSchlüssel) war in drei übereinander gestapelten Chargierkörben als Schüttgut plaziert und wies nach der Wärmebehandlung keinerlei Mängel auf.

Folgende Kriterien wurden erfüllt:
1. gut haftende, schwarze Oxidschicht
2. keine hellen Stellen durch Kontaktstellen
3. keine Blasenbildung und Oxidabplatzungen
4. Oberflächenhärte vor dem Anlassen : 57 - 58 HRC
5. Drehmoment in Ordnung
6. Oxidschicht haftet auch nach dem Anlassen (200 bis 280°C)
7. Härte nach dem Anlassen: 52 - 54 HRC
8. keine Randentkohlung erkennbar
9. Gesamturteil: keine Mängel

Der gewünschte C-Pegel der Ofengasatmosphäre wurde nach kurzer Zeit wieder erreicht, so daß eine Entkohlung der nachfolgenden Charge nicht auftrat. Eine Wasserkondensation an kalten Stellen der Vorkammer und Abgasführung wurde nicht beobachtet. Die Reproduzierbarkeit der Oxidationsergebnisse war einwandfrei.

Die Korrosionsbeständigkeit dieser nach dem erfindungsgemäßen Verfahren oxidierten Teile, ist besser als die herkömmlich beschichteten, brünierten und phosphatierten Teile, so daß die Lagerfähigkeit der Teile verlängert wurde, ohne daß störender Rost sich bildete. Das Einölen der oxidierten Teile bzw. das Aufbringen eines Fluids, wie es beim Brünieren erfolgt, kann entfallen, ohne daß sich Flugrost bildet. Durch den Wegfall der oberflächenaktiven Flüssigkeiten brauchten die Teile auch nicht bei nachfolgenden mechanischen Bearbeitungsvorgängen aufwendig gereinigt zu werden, wobei durch die fehlende anhaftende Restflüssigkeit die Standzeit von Bohremulsion verlängert wird, da eine Kontamination nicht erfolgen kann. Vor dem Brünierungsprozeß müssen die abgehärteten Teile mittels Sandstrahlen entpassiviert werden, damit das elektrolytische Abscheiden von Antimon erfolgen kann. Sandkörner und Partikel setzen sich sehr leicht in Sackbohrungen und Ritzen ab, die Bohrer und Schneidwerkzeuge schädigen und demzufolge die Standzeit der Werkzeuge stark herabsetzen, so daß aufwendige, sorgfältige Reinigungsarbeiten der sandgestrahlten Teile erfolgen müssen. Diese Kosten und Zeitverluste konnten durch den Einsatz des erfindungsgemäßen Beschichtungsverfahrens eingespart werden und eine schnelle Weiterverarbeitung der Teile erfolgen.

## Patentansprüche

1. Verfahren zum gemeinsamen Oxidieren und Wärmebehandeln von Teilen bei Temperaturen ≤ 1300°C in einem, ein neutrales oder ein reaktives Gas enthaltenden Behandlungsraum eines Ofens, durch Einleiten oder Verdüsen mindestens eines oxidierenden Reaktionsmittels bei Temperaturen > 570°C,
**dadurch gekennzeichnet,**
**daß** nach Umwandlung des bei Umgebungstemperatur vorhandenen Gefüges der Teile in das bei der Wärmebehandlung gewünschte Gefüge in dem Behandlungsraum ein PH₂O/PH₂-Verhältnis so eingestellt wird, daß die Linie FeO + H₂ = Fe + H₂O überschritten und eine Oxidschicht aus FeO < 10µm ausgebildet wird.

2. Verfahren nach Anspruch 1,
**dadurch gekennzeichnet,**
**daß** die Oxidation der Teile in einem Zeitraum < 20 Minuten abgeschlossen ist.

3. Verfahren nach Anspruch 1 oder 2,
**dadurch gekennzeichnet,**
**daß** die Oxidation der Teile in einem Zeitraum ≤ 14 Minuten abgeschlossen ist.

4. Verfahren nach einem der Ansprüche 1 bis 3,
**dadurch gekennzeichnet,**
**daß** in dem Behandlungsraum ein PH₂O/PH₂-Verhältnis > 0,3 eingestellt wird.

5. Verfahren nach einem der Ansprüche 1 bis 4,
**dadurch gekennzeichnet,**
**daß** in dem Behandlungsraum ein PH₂O/PH₂-Verhältnis < 250, vorzugsweise < 10 eingestellt, wird.

6. Verfahren nach einem der Ansprüche 1 bis 5,
**dadurch gekennzeichnet,**
**daß** die Linie FeO + H₂ = Fe + H₂O innerhalb eines Zeitraums < 3 Minuten, vorzugsweise < 1 Minute, überschritten wird.

7. Verfahren nach einem der Ansprüche 1 bis 6,
**dadurch gekennzeichnet,**
**daß** als Reaktionsmittel eine sauerstoffhaltige Verbindung in den Behandlungsraum eingeleitet oder eingedüst wird, das das PH₂O/PH₂-Verhältnis bildet.

8. Verfahren nach einem der Ansprüche 1 bis 7,
**dadurch gekennzeichnet,**
**daß** das oxidierende Reaktionsmittel Wasser, vorzugsweise entsalztes Wasser ist.

9. Verfahren nach einem der Ansprüche 1 bis 8,
**dadurch gekennzeichnet,**
**daß** mit dem Reaktionsmittel Stickstoff und/oder Endogas und/oder Wasserstoff und/oder Kohlenwasserstoffe in den Behandlungsraum eingeleitet oder eingedüst werden.

10. Verfahren nach einem der Ansprüche 1 bis 9,
**dadurch gekennzeichnet,**
**daß** die mit der Oxidschicht versehenen Teile in einem Abschreckmedium so abgekühlt werden, daß eine Vergrößerung der Oxidschicht gehemmt, vorzugsweise gestoppt, und die vorhandene Oxidschicht konserviert wird.

11. Vorrichtung zur Durchführung des Verfahrens nach einem der Ansprüche 1 bis 10,
**gekennzeichnet durch** Zuführmittel (18, 19; 21, 22; 20, 26; 23, 27) für das Reaktionsmittel in den Behandlungsraum (10) und einer Steuerung (15) zum Steuern und/oder Regeln der Mittel (18, 19; 21, 22; 20, 26; 23; 27).

12. Vorrichtung nach Anspruch 11,
**dadurch gekennzeichnet,**
**daß** die Zuführmittel (18, 19; 21, 22; 20, 26; 23, 27) aus in den Behandlungsraum (10) mündenden Leitungen (18, 21, 23, 26) bestehen, in denen Steuerelemente (19, 22, 20, 27) angeordnet sind, wobei die Steuerelemente (19, 22, 20, 27) über die Steuerung (15) kontrollierbar sind und die Steuerelemente (19, 22, 20, 27) die Leitungen (18, 21, 23, 26) zwischen der Offen- und der Zu-Stellung in Abhängigkeit von im Behandlungsraum (10) erfaßten Ist-Signalen und/oder in der Steuerung (15) abgelegten Zeitsignalen verändern.

13. Vorrichtung nach Anspruch 11 oder 12,
**dadurch gekennzeichnet,**
**daß** die Ist-Signale in Abhängigkeit von dem PH₂O/PH₂-Verhältnis gebildet werden, welche in Abhängigkeit von in der Steuerung (15) abgelegten Soll-Signalen die Stellung der Steuerelemente (19, 22, 20, 27) verändern.

14. Vorrichtung nach einem der Ansprüche 11 bis 13,
**dadurch gekennzeichnet,**
**daß** eine O₂-Sonde (13) im Behandlungsraum (10) angeordnet ist, die die Ist-Signale erfaßt.

15. Vorrichtung nach einem der Ansprüche 11 bis 13,
**dadurch gekennzeichnet,**
**daß** eine Lambda-Sonde vorgesehen ist, die die Ist-Signale erfaßt.

## Claims

1. Process for the joint oxidation and heat treatment of parts at temperatures ≤ 1300°C in a treatment compartment of a furnace comprising a neutral or a reactive gas by passing in or atomizing at least one oxidizing reactant at temperatures > 570°C, **characterized in that**, after conversion of the structure of the parts which is present at ambient temperature into the structure desired in the heat treatment, a PH₂O/PH₂ ratio is set in the treatment compartment so that the line FeO + H₂ = Fe + H₂O is exceeded and an oxide layer of FeO < 10 µm is formed.

2. Process according to Claim 1, **characterized in that** the oxidation of the parts is completed in a period < 20 minutes.

3. Process according to Claim 1 or 2, **characterized in that** the oxidation of the parts is completed in a period ≤ 14 minutes.

4. Process according to one of Claims 1 to 3, **characterized in that** a PH₂O/PH₂ ratio > 0.3 is set in the treatment compartment.

5. Process according to one of Claims 1 to 4, **characterized in that** a PH₂O/PH₂ ratio < 250, preferably < 10, is set in the treatment compartment.

6. Process according to one of Claims 1 to 5, **characterized in that** the line FeO + H₂ = Fe + H₂O is exceeded within a period < 3 minutes, preferably < 1 minute.

7. Process according to one of Claims 1 to 6, **characterized in that** the reactant passed or injected into the treatment compartment is an oxygen-containing compound which forms the PH₂O/PH₂ ratio.

8. Process according to one of Claims 1 to 7, **characterized in that** the oxidizing reactant is water, preferably demineralized water.

9. Process according to one of Claims 1 to 8, **characterized in that** nitrogen and/or endothermic atmosphere and/or hydrogen and/or hydrocarbons are passed or injected into the treatment compartment together with the reactant.

10. Process according to one of Claims 1 to 9, **characterized in that** the parts furnished with the oxide layer are cooled in a quenching medium in such a manner that enlargement of the oxide layer is inhibited, preferably stopped, and the oxide layer present is preserved.

11. Apparatus for carrying out Process according to one of Claims 1 to 10, having means (18, 19; 21, 22; 20, 26; 23, 27) for feeding the reactant into the treatment compartment (10) and a controller (15) for open- and/or closed-loop control of the means (18, 19; 21, 22; 20, 26; 23; 27).

12. Apparatus according to Claim 11, **characterized in that** the feeding means (18, 19; 21, 22; 20, 26; 23, 27) consist of lines (18, 21, 23, 26) which open into the treatment compartment (10) and in which control elements (19, 22, 20, 27) are arranged, the control elements (19, 22, 20, 27) being controllable by the controller (15) and the control elements (19, 22, 20, 27) changing the lines (18, 21, 23, 26) between the open and closed position as a function of the actual signals determined in the treatment compartment (10) and/or of the time signals recorded in the controller (15).

13. Apparatus according to Claim 11 or 12, **characterized in that** the actual signals are formed as a function of the PH₂O/PH₂ ratio which change the position of the control elements (19, 22, 20, 27) as a function of preset signals recorded in the controller (15).

14. Apparatus according to one of Claims 11 to 13, **characterized in that** an O₂ probe (13) which determines the actual signals is arranged in the treatment compartment (10).

15. Apparatus according to one of Claims 11 to 13, **characterized in that** a lambda probe which determines the actual signals is provided.

## Revendications

1. Procédé d'oxydation et de traitement thermique de groupes de pièces à des températures ≤ 1300°C dans un espace de traitement d'un four contenant un gaz neutre ou un gaz réactif, par introduction ou projection d'au moins un réactif oxydant à des températures > 570°C,
**caractérisé en ce qu'**
après transformation de la structure des pièces présentes à la température environnante en la structure désirée lors du traitement thermique dans l'espace de traitement, on établit un rapport PH₂O/PH₂ tel que la ligne FeO+H₂ = Fe+H₂O est dépassée et qu'il se forme une couche d'oxyde de Fe < 10 µm.

2. Procédé selon la revendication 1,
**caractérisé en ce que**
l'oxydation des pièces est terminée en une durée inférieure à 20 minutes.

3. Procédé selon la revendication 1 ou 2,
**caractérisé en ce que**
l'oxydation des pièces est terminée dans un intervalle de temps ≤ 14 minutes.

4. Procédé selon l'une des revendications 1 à 3,
**caractérisé en ce qu'**
on établit dans l'espace de traitement un rapport PH₂O/PH₂ > 0,3.

5. Procédé selon l'une des revendications 1 à 4,
**caractérisé en ce qu'**
on établit dans l'espace de traitement un rapport PH₂O/PH₂ < 250, de préférence < 10.

6. Procédé selon l'une des revendications 1 à 5,
**caractérisé en ce que**
la ligne FeO+H₂ = Fe+H₂O est dépassée en un intervalle de temps inférieur à 3 minutes, de préférence < 1 minute.

7. Procédé selon l'une des revendications 1 à 6,
**caractérisé en ce qu'**
on introduit ou injecte comme réactif un composé contenant de l'oxygène dans l'espace de traitement, établissant le rapport PH₂O/PH₂.

8. Procédé selon l'une des revendications 1 à 7,
**caractérisé en ce que**
le réactif oxydant est de l'eau, de préférence de l'eau dessalée.

9. Procédé selon l'une des revendications 1 à 8,
**caractérisé en ce qu'**
on introduit ou **en ce qu'**on injecte avec le réactif de l'azote et/ou un endogaz et/ou de l'hydrogène et/ou des hydrocarbures dans l'espace de traitement.

10. Procédé selon l'une des revendications 1 à 8,
**caractérisé en ce qu'**
on refroidit les pièces munies de la couche d'oxyde dans un milieu de trempe de manière à empêcher un grossissement de la couche d'oxyde, de préférence à l'arrêter, et à conserver la couche d'oxyde présente.

11. Dispositif de réalisation du procédé selon l'une des revendications 1 à 10,
**caractérisé par** des moyens d'introduction (18, 19, 21, 22, 20, 26, 23, 27) pour le réactif dans l'espace de traitement 10 et un réglage 15 pour régler et/ou réguler les moyens d'introduction (18, 19, 21, 22, 20, 26, 23, 27).

12. Dispositif selon la revendication 11.
**caractérisé en ce que**
les moyens d'introduction (18, 19, 21, 22, 20, 26, 27) se composent de canalisations (18, 21, 23, 26) débouchant dans l'espace de traitement (10), dans lesquelles des éléments de réglage (19, 22, 20, 27) sont disposés, les éléments de réglage (19, 22, 20, 27) étant contrôlables par le dispositif de réglage (15), et les éléments de réglage (19, 22, 20, 27) modifiant les canalisations (18, 21, 23, 26) entre la position ouverte et fermée en fonction des signaux réels détectés dans l'espace de traitement (10) et/ou des signaux temporels introduits dans le dispositif de réglage (15).

13. Dispositif selon la revendication 11 ou 12,
**caractérisé en ce que**
les signaux réels sont formés en fonction du rapport PH₂O/PH₂ qui modifient en fonction des signaux de consigne introduits dans le dispositif de réglage (15) la position des éléments de réglage (19,22,20,27).

14. Dispositif selon une des revendications 11 à 13,
**caractérisé en ce qu'**
on dispose une sonde O₂ (13) dans l'espace de traitement (10), qui détecte les signaux réels.

15. Dispositif selon une des revendications 11 à 13,
**caractérisé en ce qu'**
est prévue une sonde lambda qui détecte les signaux réels.
